# EUROPÄISCHE PATENTANMELDUNG

(11) **EP 2 816 630 A1**
(43) Veröffentlichungstag der Anmeldung: **24.12.2014**
(21) Anmeldenummer: 13172260.5
(22) Anmeldetag: 17.06.2013
(51) Int. Cl.: H01M 2/02, H01M 10/39, H01M 10/48, G01F 23/296

(54) **Elektrochemische Speichervorrichtung mit Zustandsdetektor**

(71) Anmelder: Siemens Aktiengesellschaft, 80333 München (DE)
(72) Erfinder: Kühne, Michael, Dr., 90762 Fürth (DE); Schuh, Carsten, Dr., 85598 Baldham (DE)

(57) **Zusammenfassung**

Die Erfindung betrifft eine elektrochemische Speichervorrichtung (1) mit Zustandsdetektor (10), umfassend eine elektrochemische Speichervorrichtung (1), die eine ein elektrochemisches Speichermaterial (2) umgebende Wandung (5) aufweist, wobei der Zustandsdetektor (10) wenigstens einen Ultraschallsender (11) und wenigstens einen Ultraschallempfänger (12) aufweist, welche an der Wandung (5), insbesondere an der vom elektrochemischen Speichermaterial (2) abgewandten Seite der Wandung (5) angebracht sind, und wobei das elektrochemische Speichermaterial (2) bei Betrieb der Speichervorrichtung (1) einer gewünschten Volumenänderung unterliegt.

## Beschreibung

Die vorliegende Erfindung betrifft eine elektrochemische Speichervorrichtung mit Zustandsdetektor sowie ein Verfahren zum Betrieb einer solchen elektrochemischen Speichervorrichtung.

Aufgrund zahlreicher vorteilhafter Funktionseigenschaften, wie etwa den hohen Energiedichten und technisch relevanten Stromdichten bei Lade- wie auch Entladevorgängen, werden zunehmend elektrochemische Speichervorrichtungen, darunter insbesondere Metall-Metallhalogenid und Natrium-Schwefel-Speicherbatterien, auch in großtechnischen Anwendungen eingesetzt. Um die Lebensdauer einer solchen elektrochemischen Speichereinrichtung zu kontrollieren und durch wartungstechnische Maßnahmen zu verlängern, ist es vorteilhaft, den Lade- bzw. Entladezustand der elektrochemischen Speichervorrichtung sicher und zuverlässig zu erfassen.

Bei dem aus dem Stand der Technik bekannten Zelldesign, etwa der auf der Technologie der Natrium-Nickel-Chlorid-Zelle basierenden elektrochemischen Speichervorrichtung, weist die Anode bzw. negativen Elektrode bei Betriebstemperaturen flüssiges Metall, speziell Natrium, als elektrochemisches Speichermaterial auf. Infolge der Lade- bzw. Entladevorgänge in dieser Speichervorrichtung ändert sich der Füllstand des flüssigen Metalls. Mit zunehmender Ladung dieser auf der Technologie der Natrium-Nickel-Chlorid-Zelle basierenden Speichervorrichtung steigt der Natriumfüllstand in einem mit der Anode der Speichervorrichtung verschalteten Anodenraum, wodurch sich Änderungen der elektrischen wie auch elektrochemischen Parameter ergeben (etwa eine Veränderung der Ladekurve). Eine vergleichbare Änderung erfolgt auch bei zunehmender Entladung der Speichervorrichtung, wobei der Natriumfüllstand dann entsprechend sinkt. Zwischen einer vollständig geladenen, auf der Technologie der Natrium-Nickel-Chlorid-Zelle basierenden Speichervorrichtung und einer vollständig entladenen Speichervorrichtung kann der Unterschied der Füllstände bis zu 10 cm und darüber betragen.

Es erweist sich also als technisch vorteilhaft, den Zustand einer solchen elektrochemischen Speichervorrichtung, insbesondere den Lade- bzw. Entladezustand einer solchen elektrochemischen Speichervorrichtung, mit ausreichender Sicherheit und kontrolliert vorherzusagen. Ein Verfahren zur direkten Messung des Füllstands in einer Natrium-Nickel-Chlorid-Speichervorrichtung wird etwa in der Patentanmeldung US 2011/0050235 beschrieben. Darin wird vorgeschlagen, mittels zweier Metallfühler, die von oben in eine Speichervorrichtung eingebracht werden, dann den elektrischen Kurzschluss zu erfassen, wenn beide Fühler durch Kontakt mit dem flüssigen Metall kurzgeschlossen werden. Nachteilig an einer solchen Lösung ist jedoch die aufwändige mechanische Integration dieser Messfühler in die Speichervorrichtung, was insbesondere schwierige Abdichtmaßnahmen erforderlich macht. Zudem ist ein Nachrüsten von bereits gefertigten Speichervorrichtungen kaum möglich. Darüber hinaus ist in einer solchen Lösung nur die binäre Information darüber abgreifbar, ob der aktuelle Füllstand über oder unter der Position der Kontaktstifte liegt; Zwischenwerte des Füllstands lassen sich nach dem Stand der Technik nicht direkt bestimmen.

Eine weitere Alternativlösung wird in der US 2011/0236749 A1 beschrieben, in welcher der Füllstand mittels kommunizierender Röhren ermittelt werden soll. Nachteilig an dieser Lösung ist jedoch weiterhin der hohe technische Aufwand, welcher für eine Zustandsdetektion in der elektrochemischen Speichervorrichtung erforderlich ist. Zudem erlaubt die Lösung wiederum keine Nachrüstung bestehender Zellen mit einer Technologie, welche die Zustandsdetektion erlauben könnte.

Eine solche Zustandsdetektion soll bevorzugt unabhängig von dem Umgebungsmedium, in welches die elektrochemische Speichervorrichtung eingebracht ist, mit ausreichender Sicherheit und Genauigkeit erfolgen können. Hierbei ist zu berücksichtigen, dass elektrochemische Speichervorrichtungen, wie etwa die Natrium-Nickel-Chlorid-Zelle bzw. die Natrium-Schwefel-Zelle nur bei mitunter hohen Temperaturen, etwa von über 250 °C, insbesondere sogar von über 350 °C betrieben werden können. Weiterhin ist es technisch wünschenswert, eine schnell erfassbare sowie für zahlreiche einzelne elektrochemische Speichervorrichtungen gleichzeitig einsetzbare Technologie vorzuschlagen, ohne dass eine platzsparende Verschaltung dieser Speichervorrichtungen in Frage stünde. Weiterhin ist es wünschenswert, insbesondere bei Verschaltung vieler elektrochemischer Speichervorrichtungen zu größeren Modulen, einzelne Zustände, insbesondere den Ladungs- bzw. Entladungszustand, einer Speichervorrichtung kontinuierlich und gezielt abzufragen. Zudem soll eine solche Technologie robust und kostengünstig sein. Ebenso soll der Wartungsaufwand für eine derartige Technologie gering ausfallen bzw. die Technologie soll wartungsfrei sein.

Diese der Erfindung zugrunde liegenden Aufgaben werden durch eine elektrochemische Speichervorrichtung gemäß Anspruch 1 sowie durch ein Verfahren zum Betrieb einer solchen vorab wie auch nachfolgend beschriebenen Speichervorrichtung gemäß Anspruch 11 gelöst.

Insbesondere werden diese der Erfindung zugrunde liegenden Aufgaben gelöst durch eine elektrochemische Speichervorrichtung mit Zustandsdetektoren, umfassend eine elektrochemische Speichervorrichtung, die eine ein elektrochemisches Speichermaterial umgebende Wandung aufweist, wobei der Zustandsdetektor wenigstens einen Ultraschallsender und wenigstens einen Ultraschallempfänger aufweist, welche an der Wandung, insbesondere an der vom elektrochemischen Speichermaterial abgewandten Seite der Wandung angebracht sind, und wobei das elektrochemische Speichermaterial bei Betrieb der Speichervorrichtung einer gewünschten Volumenänderung unterliegt. Weiterhin werden die der Erfindung zugrundeliegenden Aufgaben gelöst durch ein Verfahren zum Betrieb einer solchen wie auch nachfolgend beschriebenen elektrochemischen Speichervorrichtung, umfassend die folgenden Schritte:
- Ausgabe eines Sendesignals des Ultraschallsenders;
- Empfang eines Antwortsignals durch den Ultraschallempfänger;
- Analysieren des Antwortsignals mit einer Analyseschaltung zur Ermittlung eines Zustands des elektrochemischen Speichermaterials, insbesondere des Füllstands des elektrochemischen Speichermaterials.

An dieser Stelle sei darauf hingewiesen, dass hier und im Folgenden eine elektrochemische Speichervorrichtung dahingehend verstanden werden soll, dass diese ermöglicht, elektrischen Energie, durch eine elektrochemische Reaktion umzusetzen und diese Energie, bzw. einen Teil davon, in chemischer Form zwischenzuspeichern. Bei Abgabe der Energie wird ein elektrochemisches Speichermaterial umgesetzt, wobei erneut elektrische Energie (im Sinne von Ladungsstrom * Spannung) frei wird, die entsprechend einer weiteren Nutzung zugeführt werden kann. Zudem wird parallel zu einer Stoffumsetzung im Anodenraum stets auch eine elektrochemisch äquivalente Menge an Kathodenmaterial im Kathodenraum umgesetzt wird. Da die Mengen jedoch äquivalent sind, ist es vollkommen ausreichend, nur eine Seite der elektrochemischen Zelle, also z.B. die Anodenseite, zu betrachten.

Erfindungsgemäß ist es erforderlich, dass die Wandung das elektrochemische Speichermaterial umgibt. Dies kann eine vollständige, aber auch eine teilweise Umgebung des elektrochemischen Speichermaterials sein. Es ist also nicht erforderlich, dass die Wandung auf einer Seite von elektrochemischem Speichermaterial vollständig belegt bzw. benetzt ist. Dies ist insofern auch schon nicht möglich, da insbesondere infolge der Zustandsänderung in der elektrochemischen Speichervorrichtung eine Volumenänderung des elektrochemischen Speichermaterials erfolgt.

Weiterhin ist darauf hinzuweisen, dass der Betrieb der elektrochemischen Speichervorrichtung erfindungsgemäß alle Betriebsarten umfassen soll, insbesondere sollen bei diesen Betriebsarten gewünschte elektrochemische Reaktionen ablaufen. Dies sind vor allem ein Aufladebetrieb, sowie ein Entladebetrieb, wobei auch ein Standbybetrieb (Speicherbetrieb) ein geeigneter Betriebszustand sein kann.

Gemäß einer besonders bevorzugten Ausführungsform der Erfindung ist vorgesehen, dass der Zustandsdetektor direkt auf die Wandung der elektrochemischen Speichervorrichtung aufgebracht ist. Bevorzugt ist hierbei die Anordnung von Ultraschallsender und Ultraschallempfänger derart, dass diese über eine zumindest in eine Richtung gerade, auf der Wandung liegende Stecke verbindbar sind. Hierzu ist die Wandung bspw. derart geformt, dass ein linearer Abschnitt bzw. ein ebener Flächenabschnitt der Wandung vorliegt. Hierdurch ist eine lineare und damit kontrollierte und direkte Schallleitung gut möglich.

Ausführungsgemäß kann auch vorgesehen sein, dass die Wandung von einem Zellengehäuse der Speichervorrichtung mit umfasst ist, bzw. diese ist.

Die gewünschte Volumenänderung des elektrochemischen Speichermaterials betrifft insbesondere eine Füllstandsänderung, da die Speichervorrichtung je nach Ladezustand bzw. Entladezustand mit mehr oder weniger elektrochemischem Speichermaterial gefüllt ist. Der Betrieb der Speichervorrichtung vermehrt das Volumen des elektrochemischem Speichermaterials (etwa beim Laden) oder verringert das Volumen (etwa beim Entladen). Die Volumenänderung resultiert also nicht allein aus einer rein thermischen Volumenänderung des elektrochemischen Speichermaterials sondern erfordert die mengenmäßige Zu- bzw. Abnahme von elektrochemischem Speichermaterial aufgrund von elektrochemischen Reaktionen.

Erfindungsgemäß ist also vorgesehen, eine elektrochemische Speichervorrichtung mit einem Zustandsdetektor zu versehen, der mittels Ultraschallsender und Ultraschallempfänger eine Zustandsdetektion, insbesondere eine Füllstandsdetektion ermöglicht. Der Ultraschallsender sowie der Ultraschallempfänger sind auf der das elektrochemische Speichermaterial umgebenden Wandung angebracht und sind folglich mit dieser Wandung akustisch gekoppelt. Bei Ausgabe eines Sendesignals des Ultraschallsenders wird der Schall entlang der Wandung in Richtung zum Ultraschallempfänger geleitet. Hierbei können sich die vom Ultraschallsender abgegebenen Sendesignale als Akustikwellen im bzw. auf dem Material der Wandung fortpflanzen. Trifft nun das Sendesignal auf einen Dichteunterschied bei dieser Fortpflanzung, wird ein Teil dieser Wellen gestreut, absorbiert bzw. reflektiert. Je nach örtlicher Anordnung des Ultraschallempfängers in Bezug auf den Ultraschallsender kann nun entweder die Dämpfung oder Phasenverschiebung des Sendesignals durch den Ultraschallempfänger erfasst werden, oder es werden die gestreuten bzw. reflektierten Wellen als Antwortsignal durch den Ultraschallempfänger erfasst, und mittels einer geeigneten Analyseschaltung analysiert.

Da der Ultraschallsender wie der Ultraschallempfänger auf der das elektrochemische Speichermaterial umgebenden Wandung angebracht sind, werden je nach Volumenänderung des elektrochemischen Speichermaterials, d.h. etwa je nach Füllstand des elektrochemischen Speichermaterials, die Akustikwellen früher oder später durch den Füllstand beeinflusst. Aus dem zeitlichen Verlauf bzw. der Dämpfung oder auch aus der Phasenverschiebung dieser beeinflussten Oberflächenwellen können im Vergleich zum ursprünglich ausgesandten Sendesignal des Ultraschallsenders Rückschlüsse auf den Ort der Beeinflussung, um damit auf die Füllstandshöhe bzw. -grenze des elektrochemischen Speichermaterials getroffen werden.

Die erfindungsgemäße technische Lösung ermöglicht also eine im Wesentlichen kontinuierliche, hochpräzise und robuste Echtzeitmessung des Zustands der elektrochemischen Speichervorrichtung. Insbesondere wird das Volumen, bevorzugt der Füllstand des elektrochemischen Speichermaterials genau erfasst. Weiterhin werden keine Zustandsdetektoren im Anoden- bzw. Kathodenraum der elektrochemischen Speichervorrichtung benötigt, wodurch sich die Anordnung durch eine große Einfachheit und damit erhöhte Lebensdauer auszeichnet. Der Zustandsdetektor kann zudem etwa auf die äußere Wandung einer Zelle, dem Zellengehäuse aufgebracht werden. Dadurch kann vermieden werden, dass eigene kommunizierende Messzellen, wie aus dem Stand der Technik bekannt, fluidtechnisch angeschlossen werden müssen. Weiter kann eine derartige elektrochemische Speichervorrichtung in zahlreichen Umgebungsmedien eingesetzt werden, bspw. in Luft oder aber auch in flüssigen Medien wie Thermoöl, wodurch eine geeignete Kühlung bzw. ein geeignetes Wärmemanagement dieser elektrochemischen Speichervorrichtung ermöglicht werden kann.

Aufgrund der verhältnismäßig geringen akustischen Auslenkungsamplituden des Sendesignals des Ultraschallsenders wie auch der Antwortsignale für den Ultraschallempfänger werden die Komponenten der elektrochemischen Speichervorrichtung, wie Elektrolyt- oder Elektrodenschichten, Schweißnähte und Dichtungen keinen hohen mechanischen Belastungen ausgesetzt, wodurch Beschädigungen weitgehend auszuschließen sind.

Neben der Zustandsdetektion des elektrochemischen Speichermaterials, welches von der elektrochemischen Speichervorrichtung umfasst wird, kann gleichzeitig auch eine Temperaturermittlung erfolgen, da bei zunehmender Temperatur eine thermische Ausdehnung des Materials der Wandung erfolgt, was wiederum messtechnisch mit Hilfe der Ultraschallsender und Ultraschallempfänger erfasst werden kann. Folglich können durch die Erfindung mehrere betriebsrelevante Größen erfasst werden. Dies erhöht die Flexibilität der elektrochemischen Speichervorrichtung.

Gemäß einer ersten besonders bevorzugten Ausführungsform der Erfindung ist vorgesehen, dass das elektrochemische Speichermaterial bei Betrieb der Speichervorrichtung flüssig und insbesondere in direktem Kontakt mit der Wandung vorliegt. Das elektrochemische Speichermaterial liegt hierbei bevorzugt im Anodenraum vor. Ein direkter Kontakt zwischen elektrochemischem Speichermaterial und Wandung fördert das Erfassungsprinzip, welches eine Beeinflussung des durch den Ultraschallsender ausgesendeten Sendesignals erfordert. Aufgrund der direkten mechanischen Kopplung zwischen Wandung und elektrochemischem Speichermaterial ist auch eine ausreichend gute akustische Kopplung gewährleistet. Liegt das elektrochemische Speichermaterial überdies flüssig vor, kann der Ort der Beeinflussung des Sendesignals besonders genau erfasst werden, da eine gut zu erfassende Phasengrenze vorliegt.

Typische Betriebstemperaturen einer ausführungsgemäß beanspruchten elektrochemischen Speichervorrichtung liegen bei etwa 200°C und darüber. Eine vorteilhafte obere Temperaturgrenze kann etwa 500 °C sein. Derartig hohe Betriebstemperaturen gewährleisten, dass das elektrochemische Speichermaterial, insbesondere bei Speichervorrichtungen, die auf der Technologie der Natrium-Nickel-Chlorid-Zellen sowie der Natrium-Schwefel-Zellen basieren, flüssig vorliegt. Die Erfassung des Füllstands bei solchen Temperaturen ist besonders vorteilhaft, da eine klar erfassbare Phasengrenze vorliegt.

Gemäß einer weiteren besonders vorteilhaften Ausführungsform der Erfindung ist vorgesehen, dass das elektrochemische Speichermaterial ein Metall ist, dessen Schmelzpunkt insbesondere nicht höher als 150 °C ist. Das elektrochemische Speichermaterial liegt hierbei bevorzugt im Anodenraum vor. Bevorzugt liegt der Schmelzpunkt auch höher als 0°C. Insbesondere ist das Metall Natrium, welches einen Schmelzpunkt bei Standardbedingungen von 97,72 °C aufweist. Metall ist ein besonders guter akustischer Leiter, so dass sich Phasengrenzen bei Metall mittels akustischer Ultraschallsignale besonders gut erfassen lassen. Die guten Schallleitungseigenschaften von Metall betreffen sowohl Metall in fester wie auch in flüssiger Phase.

Gemäß einer weiteren bevorzugten Ausführungsform der Erfindung ist vorgesehen, dass die Wandung ein Metall, insbesondere eine Metalllegierung, dessen/deren Schmelzpunkt höher als 800 °C, ist. Bevorzugt ist das Metall eine Nickel-Basislegierung, oder ein Stahl bzw. eine Stahllegierung. Solche Metalle erlauben auch den Betrieb der elektrochemischen Speichervorrichtung bei hohen Temperaturen, wobei auch bei diesen Temperaturen gute Schallleitungseigenschaften gewährleistet sind. Weiterhin erweist sich ein solches Metall, insbesondere eine Nickel-Basislegierung, oder ein Stahl bzw. eine Stahllegierung, als wenig korrosiv bei Einsatz in Verbindung mit stark korrosiven elektrochemischen Speichermaterialien, wie etwa Natrium in einer auf der Natrium-Nickel-Chlorid-Zelle basierenden Speichervorrichtung. Metall weist zudem eine ausreichend glatte Oberfläche auf, bzw. eine solche kann durch geeignete Bearbeitungsverfahren bereitgestellt werden, über welche eine besonders gute Einkopplung von akustischen Wellen erfolgen kann. Zudem kann ein solches Metall, bzw. eine Nickel-Basislegierung, oder ein Stahl, bzw. eine Stahllegierung ausreichend dünn ausgestaltet sein, so dass bei Schallleitung in dem Material eine gute Beeinflussung der Schallleitungseigenschaften durch mit diesem Material in mechanischer Verbindung stehende Stoffe erreicht werden kann.

Entsprechend eines weiteren besonders vorteilhaften Aspekts der Erfindung ist vorgesehen, dass bei Betrieb der Speichervorrichtung die Volumenänderung des elektrochemischen Speichermaterials bei vollständiger Ladung der Speichervorrichtung einen ersten Füllstand definiert und der Ultraschallsender oder der Ultraschallempfänger an einem ersten Ort der Wandung angebracht sind, dessen korrespondierender Bereich der gegenüberliegenden Seite der Wandung noch über diesem Füllstand (über diesem Füllstandsniveau) liegt. Hierbei soll angenommen werden, dass die Speichervorrichtung zweckgemäß betrieben wird und sich bei diesem Betrieb ein Füllstand wiederholbar einstellen lässt. Typischerweise werden die Speichervorrichtungen während eines Betriebs nicht weiter bewegt, so dass ein Füllstand kontrolliert und wiederholbar erfasst werden kann. Weiter weisen einige Speichervorrichtungen eine Geometrie auf, die es erforderlich macht, die Speichervorrichtung in vorgegebener Ausrichtung zum Erdgravitationsfeld anzuordnen (etwa bei der Natrium-Nickel-Chlorid-Zelle, deren elektrochemisches Speichermaterial Natrium bei Betrieb der Zelle unten, d.h. näher dem Erdkern zugeordnet ist). Eine solche durch die Geometrie erforderliche Ausrichtung entspricht hierbei auch einer zweckgemäßen Ausrichtung und lässt etwa im Falle einer Natrium-Nickel-Chlorid-Speichervorrichtung den Füllstand des flüssigen Natriums wiederholbar bestimmen. Ein Liegen über dem Füllstand bedeutet, dass der betreffende Bereich der gegenüberliegenden Seite der Wandung nicht von dem elektrochemischen Speichermaterial bedeckt ist, bzw. sich nicht auf einem vergleichbaren Niveau befindet. Aufgrund dieser Anordnung von Ultraschallsender oder Ultraschallempfänger kann der Füllstand der elektrochemischen Speichervorrichtung zu allen Lade- bzw. Entladezuständen erfasst werden. Dies erlaubt eine über alle Ladezustände hinweg geeignete Erfassung.

Gemäß einer weiteren besonders vorteilhaften Ausführungsform der Erfindung ist vorgesehen, dass bei Betrieb der Speichervorrichtung die Volumenänderung des elektrochemischen Speichermaterials bei betriebsgemäßer vollständiger Entladung der Speichervorrichtung einen zweiten Füllstand definiert und der Ultraschallsender oder der Ultraschallempfänger an einem zweiten Ort der Wandung angebracht sind, dessen korrespondierender Bereich der gegenüberliegenden Seite der Wandung noch unter dem Füllstand (bzw. unter dem Füllstandsniveau) liegt. Hierbei soll wiederum angenommen werden, dass die Speichervorrichtung zweckgemäß betrieben wird bzw. eine auf Grundlage der Geometrie vorgegebene Ausrichtung zum Erdgravitationsfeld vorliegt. Ein Liegen unter dem Füllstand bedeutet hierbei, dass der betreffende Bereich der gegenüberliegenden Seite der Wandung von dem elektrochemischen Speichermaterial auch dann noch bedeckt ist bzw. sich unter einem vergleichbaren Niveau befindet, wenn die Speichervorrichtung bereits vollständig entladen ist. Eine vollständige Entladung liegt vor allem dann vor, wenn die Speichervorrichtung ausgehend von einem vorhergehenden Ladezustand durch einen Entladevorgang vollständig entladen wurde (Im Falle der Natrium-Nickel-Chlorid-Zelle liegt auch zum Zeitpunkt einer initialen Aufladung ein Zustand vor, bei dem keine Abgabe von elektrischer Energie vorgesehen ist. Dieser initiale Zustand soll vorliegend jedoch nicht mit umfasst sein, wenn von einer vollständigen Entladung die Rede ist). Diese Ausführungsform erlaubt wiederum die vollständige Erfassung aller Füllstände der möglichen Lade- wie Entladezustände der elektrochemischen Speichervorrichtung.

Entsprechend einer weiteren sehr vorteilhaften Ausführungsform der Erfindung ist vorgesehen, dass der Zustandsdetektor einen Ultraschallsender aufweist, welcher auch als Ultraschallempfänger arbeitet. Beide, Ultraschallsender und Ultraschallempfänger können also in ein Bauteil integriert sein. Dies verringert einerseits den Bauteilaufwand zudem kann der Ultraschallsender bzw. Ultraschallempfänger auch in einem Bereich der Wandung angebracht sein, welcher auf der dem Ultraschallsender bzw. Ultraschallempfänger gegenüber liegenden Seite der Wandung nicht mit elektrochemischem Speichermaterial in Kontakt sein muss. Bei Integration von Ultraschallsender und Ultraschallempfänger in einem Bauteil kann dieses bspw. zeitlich abwechselnd getaktet, d.h. einmal als Ultraschalsender und einmal als Ultraschallempfänger arbeiten.

Weiter kann vorgesehen sein, dass der Zustandsdetektor dazu ausgebildet ist, in einem Chirp-Betrieb betrieben zu werden. Bei einem derartigen Chirp-Betrieb erfolgt die Signalsendung durch den Ultraschallsender mit einer Signalmodulation über einen vorbestimmten Frequenzbereich, wodurch die Ortsauflösung nach Empfang und Analyse des Antwortsignals noch deutlich gesteigert werden kann im Vergleich zum Betrieb mit einem monofrequenten Sendesignal. Nach Empfang des Antwortsignals kann insbesondere eine Frequenzanalyse vorgenommen werden, die einen deutlich höheren Informationsgehalt aufweist als im Vergleich zu einer Analyse eines lediglich monofrequenten Sendesignals.

Weiterhin ist vorgesehen, dass der Zustandsdetektor einen Ultraschallsender und/oder einen Ultraschallempfänger aufweist, welcher als piezoelektrisches Bauteil ausgebildet ist. Derartige piezoelektrische Bauteile ermöglichen die einfache Erzeugung eines hochfrequenten, energiereichen Schallfeldes mit einer Richtcharakteristik, wodurch die akustischen Signale bevorzugt in eine Richtung abgegeben bzw. aus einer Richtung empfangen werden können. Dies erhöht wiederum die Genauigkeit der Zustandsdetektion.

Gemäß einer weiteren besonders bevorzugten Ausführungsform der Erfindung ist vorgesehen, dass die elektrochemische Speichervorrichtung als eine Metall-Metall-Halogenid-Speichervorrichtung ausgebildet ist. Speziell sind diese Speichervorrichtungen als Natrium-Nickel-Chlorid-Speichervorrichtung ausgebildet. Diese Speichervorrichtungen weisen als elektrochemisches Speichermaterial bei Betriebstemperaturen flüssiges Natrium auf, dessen Füllstand besonders gut erfasst werden kann, da dieses als Metall besonders gute Schallleitungseigenschaften aufweist.

Gemäß einer ersten besonders bevorzugten Ausführungsform des Verfahrens ist vorgesehen, dass das Sendesignal eine Mehrzahl an verschiedenen Ultraschallfrequenzen aufweist, und insbesondere als Rampe über einen vorbestimmten Frequenzbereich ausgebildet ist. Geeignete Frequenzbereiche liegen hierfür wie im Allgemeinen für die gesamte zerstörungsfreie Ultraschalldetektion zwischen 10 kHz und 1 GHz. Hierbei wird bei einem Rampenbetrieb lediglich ein kleines Fenster aus diesem Frequenzbereich abgefahren. Eine Rampe hat etwa eine Pulsdauer von etwa 10 µs, wobei als geeigneter Pulsabstand 1 Millisekunde bis 10 Sekunden gewählt werden können. Die Mehrzahl an verschiedenen Ultraschallfrequenzen ermöglicht eine hinsichtlich der Ortsauflösung bessere Analyse des Zustands des elektrochemischen Speichermaterials, insbesondere des Füllstands.

Gemäß einer weiteren Ausführungsform der Erfindung ist vorgesehen, dass die Analyse des Antwortsignals den zeitlichen Verlauf zwischen Sendesignal und Antwortsignal und/oder die Phasenverschiebung zwischen Sendesignal und Antwortsignal und/oder die Dämpfung des Antwortsignals gegenüber dem Sendesignal betrifft. Alle Formen der Analyse ermöglichen eine Aussage über den Verlauf der akustischen Welle in der Wandung zu treffen. Verschiedene Analysemethoden können zudem auch kombiniert werden, wodurch die Ortsauflösung der Füllstandshöhe noch weiter verbessert werden kann.

Gemäß einer weiteren besonders vorteilhaften Ausführungsform der Erfindung ist vorgesehen, dass die Ausgabe des Sendesignals gerichtet in eine bevorzugte Ausbreitungsrichtung des Sendesignals erfolgt. Die bevorzugte Ausbreitungsrichtung entspricht hierbei insbesondere einer zumindest in eine Richtung geraden, auf der Wandung liegende Stecke. Eine Richtung des Sende- bzw. Empfangssignals kann mittels geeigneter piezoelektrischer Aktuatoren bzw. Sensoren erreicht werden. Derartige Bauteile weisen bevorzugt eine Richtcharakteristik auf, die z.B. erlaubt, Sendesignale in eine Vorzugsrichtung abzustrahlen bzw. aus einer Vorzugsrichtung aufzunehmen.

Nachfolgend soll die Erfindung anhand einzelner Figuren im Detail beschrieben werden. Hierbei ist darauf hinzuweisen, dass die Figuren lediglich schematisch zu verstehen sind, die keine Einschränkung hinsichtlich der Ausführbarkeit der Erfindung erlauben.

Weiter sei darauf hingewiesen, dass Bauteile mit gleichen Bezugszeichen eine gleiche technische Wirkung aufweisen.

Fernerhin sei darauf hingewiesen, dass vorliegend die einzelnen Bauteile für sich wie auch in beliebiger Kombination miteinander beansprucht werden, wobei die Kombination die der Erfindung zugrundeliegenden technischen Probleme zu lösen vermag.

Hierbei zeigen:
- Figur 1: eine erste Ausführungsform der erfindungsgemäßen elektrochemischen Speichervorrichtung in schematischer seitlicher Schnittansicht;
- Figur 2: eine weitere Ausführungsform der erfindungsgemäßen elektrochemischen Speichervorrichtung in schematischer seitlicher Schnittansicht;
- Figur 3: eine weitere Ausführungsform der erfindungsgemäßen elektrochemischen Speichervorrichtung in schematischer seitlicher Schnittansicht;
- Figur 4: eine flussdiagrammatische Darstellung einer Ausführungsform des erfindungsgemäßen Verfahrens zum Betrieb einer solchen elektrochemischen Speichervorrichtung.

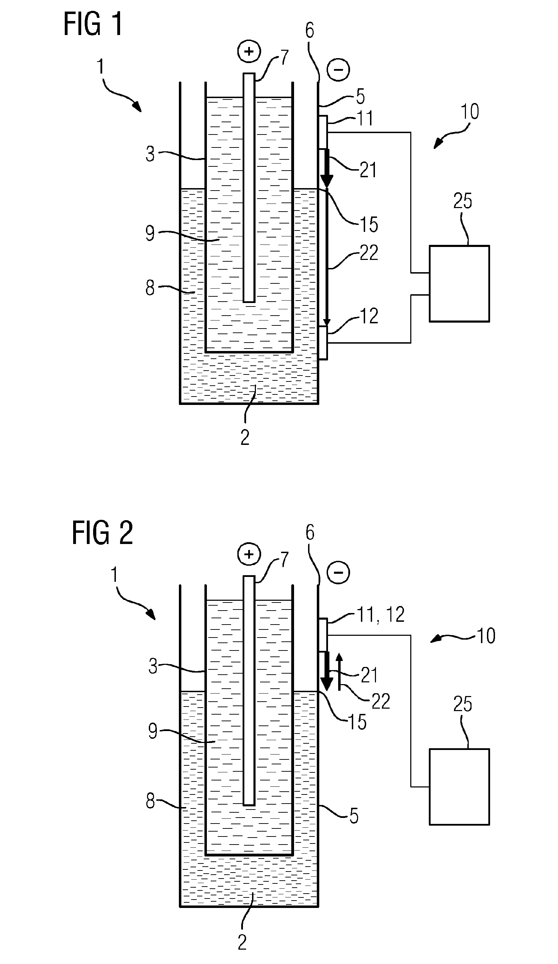

Figur 1 zeigt eine schematische seitliche Schnittansicht durch eine Ausführungsform einer elektrochemischen Speichervorrichtung 1, welche einen Zustandsdetektor 10 aufweist. Die elektrochemische Speichervorrichtung 1 hat eine Wandung 5, die ein elektrochemisches Speichermaterial 2 wenigstens teilweise umgibt, wobei die elektrochemische Speichervorrichtung 1 etwa als Natrium-Nickel-Chlorid-Zelle ausgeführt ist. Entsprechend einer solchen Ausführungsform ist das elektrochemische Speichermaterial 2 als bei Betriebstemperaturen dieser Speichervorrichtung 1 flüssiges Natrium ausgebildet. Die Wandung 5 wäre typischerweise ein aus einer Nickel-Basislegierung oder Stahlblech bzw. aus einem Stahllegierungsblech geformtes Behältnis. Ebenfalls umfasst die elektrochemische Speichervorrichtung 1 neben der als Anode 6 ausgebildeten Wandung 5 eine Kathode 7, die in einem nicht weiter mit Bezugszeichen versehenen Kathodenraum 9 angeordnet ist. Dieser Kathodenraum 9 ist von dem elektrochemischen Speichermaterial 2, welches sich in einem ebenfalls nicht mit Bezugszeichen versehenen Anodenraum 8 befindet, durch eine elektrolytische Trennschicht 3 abgetrennt. Im Falle der Ausführung der elektrochemischen Speichervorrichtung 1 als Natrium-Nickel-Chlorid-Zelle wäre diese elektrolytische Trennschicht 3 als Ionen leitende Keramikschicht (Festkörperelektrolyt) ausgebildet.

Weiter weist die elektrochemische Speichervorrichtung 1 an der dem elektrochemischen Speichermaterial 2 abgewandten Seite der Wandung 5 einen Zustandsdetektor 10 auf, der einen Ultraschallsender 11 wie auch einen Ultraschallempfänger 12 umfasst. Beide Bauteile 11, 12 sind an der Wandung der elektrochemischen Speichervorrichtung 1 angebracht, wobei ausführungsgemäß beide Bauteile 11, 12 über eine zumindest in eine Richtung gerade, auf der Wandung liegende Stecke verbindbar sind,. Zwischen dem Ultraschallsender 11 sowie dem Ultraschallempfänger 12 und der Wandung 5 liegt eine akustische Kopplung vor, so dass mit dem Ultraschallsender 11 geeignete akustische Sendesignale in die Wandung 5 eingekoppelt und als Antwortsignal mittels dem Ultraschallempfänger 12 empfangen werden können. Sowohl Ultraschallsender 11, als auch Ultraschallempfänger 12 sind über eine Analyseschaltung 25 verbunden, die eine Analyse des Antwortsignals und damit eine Ermittlung des Zustands des elektrochemischen Speichermaterials, insbesondere des Füllstands des elektrochemischen Speichermaterials 2 in dem Anodenraum 8 ermöglicht.

Funktionsgemäß koppelt der Ultraschallsender 11 des Zustandsdetektors 10 ein akustisches Sendesignal 21 in die Wandung 5 ein. Dieses typischerweise als Akustikwellen (Körperschall und Oberflächenwellen) ausgebildete Sendesignal 21 pflanzt sich in Richtung des Ultraschallempfängers 12 fort. Auf seinem Weg zu dem Ultraschallempfänger 12 erfolgt jedoch eine Beeinflussung der akustischen Wellenausbreitung, da sich das Umgebungsmedium der Wandung 5 über den Ausbreitungsweg hin ändert. So wird insbesondere an der Grenzfläche des elektrochemischen Speichermaterials 2, welches insbesondere in flüssiger Form vorliegt, die Ausbildung eines Übergangsbereichs 15 erreicht, der eine Dämpfung des Sendesignals 21 bzw. eine Reflektion oder Beugung des Sendesignals 21 zur Folge hat. Dem entsprechend wird durch den Ultraschallempfänger 12 ein entsprechend gedämpftes, verzögertes bzw. hinsichtlich seines Phasenverhaltens geändertes akustisches Sendesignal 21 als Anwortsignal 22 empfangen. Bei Vergleich der physikalischen Kenngrößen beider Signale 21 und 22 kann folglich ein Rückschluss auf den genauen Ort des Übergangsbereichs 15 gezogen werden. Ist bspw. der Zustandsdetektor 10 entsprechend kalibriert, lässt sich die Position des Übergangsbereichs 15 in eine Grenzflächenposition (Füllstandshöhe) des elektrochemischen Speichermaterials 2 umrechnen.

Da die elektrochemische Speichervorrichtung 1 typischerweise bei einer Temperatur betrieben wird, die deutlich über der Umgebungstemperatur liegt, kommt es zu thermischen Ausdehnungen einzelner Materialien der Bauteile. Diese Ausdehnungen können mitunter zur Bestimmung der Betriebstemperatur herangezogen werden, wenn etwa eine geeignete Kalibrierung vorliegt. So kann bspw. unter Heranziehung eines geeigneten Referenzpunktes (bspw. der Übergang zwischen Seitenwandung und Bodenfläche) ebenfalls eine Ausdehnung mittels der Analyseschaltung 25 berechnet werden. Diese Ausdehnung lässt sich mittels eines geeigneten Kalibriernormals wiederum einer vorgegebenen Temperatur zuordnen, wodurch eine Temperaturmessung ermöglicht werden kann.

Figur 2 zeigt eine weitere Ausführungsform der erfindungsgemäßen elektrochemischen Speichervorrichtung 1 in seitlicher Schnittansicht, welche sich von der in Figur 1 gezeigten Ausführungsform dahingehend unterscheidet, dass der Ultraschallsender 11 und der Ultraschallempfänger 12 des Zustandsdetektors 10 in einem Bauteil vereinigt sind. Ausführungsgemäß ist vorgesehen, dass der Zustandsdetektor an einem ersten Ort der Wandung 5 angebracht ist, dessen korrespondierender Bereich der gegenüberliegenden Seite der Wandung 5 noch über dem Füllstand des elektrochemischen Speichermaterials 2 bzw. über dem Füllstandsniveau liegt. Wird nun mittels dem Ultraschallsender 11 ein akustisches Sendesignal 21 abgegeben, wird dieses wiederum im Übergangsbereich 15 der Wandung 5 gedämpft, gestreut bzw. reflektiert. Ein reflektierter Anteil dieses Sendesignals 21 wird als Antwortsignal 22 durch den Ultraschallempfänger 12 detektiert. Aufgrund der so erfassten Informationen zu Sendesignal 21 und Antwortsignal 22 kann erneut mittels der Analyseschaltung 25 der Grenzflächenbereich (Übergangsbereich 15) und damit der Füllstand des elektrochemischen Speichermaterials 2 bestimmt werden. Hierbei kann der Zustandsdetektor 10 bspw. als piezoelektrische Baueinheit ausgestaltet sein, die in zeitlich kurz aufeinanderfolgenden Schritten als Ultraschallsender 11 und danach als Ultraschallempfänger 12 arbeiten kann. Derartige Bauteile erlauben zudem auch eine Erfassung einer gerichteten Welle, die eine gezielte Raumauflösung ermöglicht.

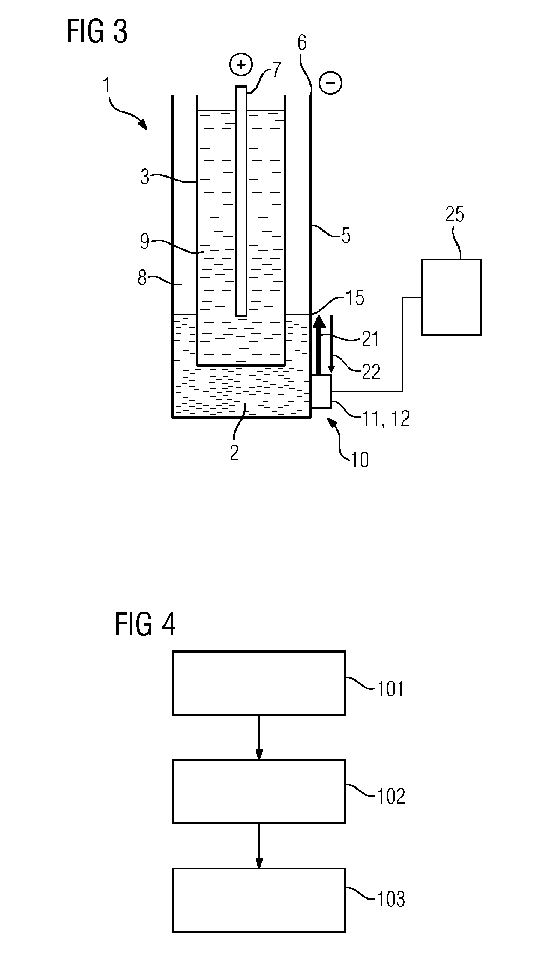

Figur 3 zeigt wiederum eine seitliche Schnittansicht in schematischer Form durch eine weitere Ausführungsform der erfindungsgemäßen elektrochemischen Speichervorrichtung 1, bei welcher der Zustandsdetektor 10, ähnlich der Ausführungsform nach Figur 2, als integriertes Bauteil sowohl Ultraschallsender 11 als auch Ultraschallempfänger 12 umfasst. Das Bauteil ist wiederum mit einer Analyseschaltung 25 elektrisch verschaltet. Anders als bei der in Figur 2 dargestellten Ausführungsform ist jedoch der Zustandsdetektor 10 an einem zweiten Ort der Wandung angebracht, dessen korrespondierender Bereich der gegenüberliegenden Seite der Wandung noch unter dem Füllstand bzw. noch unter dem Füllstandsniveau liegt. Der Füllstand entspricht hierbei etwa einer vollständigen Entladung bei normalem Betrieb. So kann bspw. der Zustandsdetektor 10 nahe der Kante des Bodenbereichs angebracht sein.

Figur 4 zeigt eine flussdiagrammatische Ausführungsform des erfindungsgemäßen Verfahrens zum Betrieb einer vorab beschriebenen elektrochemischen Speichervorrichtung, welches folgende Schritte umfasst:
- Ausgabe eines Sendesignals 21 des Ultraschallsenders 11 (erster Verfahrensschritt 101);
- Empfang eines Antwortsignals 22 durch den Ultraschallempfänger 12 (zweiter Verfahrensschritt 102);
- Analysieren des Antwortsignals mit einer Analyseschaltung 25 zur Ermittlung eines Zustands des elektrochemischen Speichermaterials 2, insbesondere des Füllstands des elektrochemischen Speichermaterials 2 (dritter Verfahrensschritt 103).

Weitere Ausführungsformen ergeben sich aus den Unteransprüchen.

## Patentansprüche

1. Elektrochemische Speichervorrichtung (1) mit Zustandsdetektor (10), umfassend eine elektrochemische Speichervorrichtung (1), die eine ein elektrochemisches Speichermaterial (2) umgebende Wandung (5) aufweist, wobei der Zustandsdetektor (10) wenigstens einen Ultraschallsender (11) und wenigstens einen Ultraschallempfänger (12) aufweist, welche an der Wandung (5), insbesondere an der vom elektrochemischen Speichermaterial (2) abgewandten Seite der Wandung (5) angebracht sind, und wobei das elektrochemische Speichermaterial (2) bei Betrieb der Speichervorrichtung (1) einer gewünschten Volumenänderung unterliegt.

2. Elektrochemische Speichervorrichtung gemäß Anspruch 1,
**dadurch gekennzeichnet, dass** das elektrochemische Speichermaterial (2) bei Betrieb der Speichervorrichtung (1) flüssig und insbesondere in direktem Kontakt mit der Wandung (5) vorliegt.

3. Elektrochemische Speichervorrichtung gemäß einem der vorhergehenden Ansprüche,
**dadurch gekennzeichnet, dass** das elektrochemische Speichermaterial (2) ein Metall ist, dessen Schmelzpunkt insbesondere nicht höher als 150 °C ist.

4. Elektrochemische Speichervorrichtung gemäß einem der vorhergehenden Ansprüche,
**dadurch gekennzeichnet, dass** die Wandung (5) ein Metall ist, insbesondere eine Metalllegierung, dessen/deren Schmelzpunkt höher als 800 °C ist.

5. Elektrochemische Speichervorrichtung gemäß einem der vorhergehenden Ansprüche,
**dadurch gekennzeichnet, dass** bei Betrieb der Speichervorrichtung (1) die Volumenänderung des elektrochemischen Speichermaterials (2) bei vollständiger Ladung der Speichervorrichtung (1) einen ersten Füllstand definiert, und der Ultraschallsender (11) oder der Ultraschallempfänger (12) an einem ersten Ort der Wandung (5) abgebracht sind, dessen korrespondierender Bereich der gegenüberliegenden Seite der Wandung (5) noch über diesem Füllstand liegt.

6. Elektrochemische Speichervorrichtung gemäß einem der vorhergehenden Ansprüche,
**dadurch gekennzeichnet, dass** bei Betrieb der Speichervorrichtung (1) die Volumenänderung des elektrochemischen Speichermaterials (2) bei betriebsgemäßer vollständiger Entladung der Speichervorrichtung (1) einen zweiten Füllstand definiert, und der Ultraschallsender (11) oder der Ultraschallempfänger (12) an einem zweiten Ort der Wandung (5) abgebracht sind, dessen korrespondierender Bereich der gegenüberliegenden Seite der Wandung (5) noch unter dem Füllstand liegt.

7. Elektrochemische Speichervorrichtung gemäß einem der vorhergehenden Ansprüche,
**dadurch gekennzeichnet, dass** der Zustandsdetektor (10) einen Ultraschallsender (11) aufweist, welcher auch als Ultraschallempfänger (12) arbeitet.

8. Elektrochemische Speichervorrichtung gemäß einem der vorhergehenden Ansprüche,
**dadurch gekennzeichnet, dass** der Zustandsdetektor (10) dazu ausgebildet ist, in einem Chirp-Betrieb betrieben zu werden.

9. Elektrochemische Speichervorrichtung gemäß einem der vorhergehenden Ansprüche,
**dadurch gekennzeichnet, dass** der Zustandsdetektor (10) einen Ultraschallsender (11) und/oder einen Ultraschallempfänger (12) aufweist, welcher als piezoelektrisches Bauteil ausgebildet ist.

10. Elektrochemische Speichervorrichtung gemäß einem der vorhergehenden Ansprüche,
**dadurch gekennzeichnet, dass** die elektrochemische Speichervorrichtung (1) als eine Metall-Metall-Halogenid-Speichereinrichtung ausgebildet ist.

11. Verfahren zum Betrieb einer elektrochemischen Speichervorrichtung gemäß einem der vorhergehenden Ansprüche, umfassend die folgenden Schritte:
- Ausgabe eines Sendesignals (21) des Ultraschallsenders (11) ;
- Empfang eines Antwortsignals (22) durch den Ultraschallempfänger (12);
- Analysieren des Antwortsignals mit einer Analyseschaltung (25) zur Ermittlung eines Zustands des elektrochemischen Speichermaterials (2), insbesondere des Füllstands des elektrochemischen Speichermaterials (2);

12. Verfahren gemäß Anspruch 11,
**dadurch gekennzeichnet, dass** das Sendesignal (21) eine Mehrzahl an verschiedenen Ultraschallfrequenzen aufweist, und insbesondere als Rampe über einen vorbestimmten Frequenzbereich ausgebildet ist.

13. Elektrochemische Speichervorrichtung gemäß einem der vorhergehenden Ansprüche 11 oder 12,
**dadurch gekennzeichnet, dass** die Analyse des Antwortsignals (22) den zeitlichen Verlauf zwischen Sendesignal (21) und Antwortsignal (22), und/oder die Phasenverschiebung zwischen Sendesignal (21) und Antwortsignal (22), und/oder die Dämpfung des Antwortsignals (22) gegenüber dem Sendesignal (21) betrifft.

14. Elektrochemische Speichervorrichtung gemäß einem der vorhergehenden Ansprüche 11 bis 13,
**dadurch gekennzeichnet, dass** die Ausgabe des Sendesignals (21) gerichtet in eine bevorzugte Ausbreitungsrichtung des Sendesignals (21) erfolgt.
